# DEMANDE DE BREVET EUROPEEN

(11) **EP 0 680 698 A1**
(43) Date de publication de la demande: **08.11.1995**
(21) Numéro de dépôt: 95400989.0
(22) Date de dépôt: 02.05.1995
(51) Int. Cl.: A23L 1/01, A23P 1/16

(54) **Procédé de fabrication de produits alimentaires au moins en partie sous forme de mousse par cuisson en 2 étapes, et produits obtenus**

(30) Priorité: 02.05.1994 FR 9405301
(71) Demandeur: SOPARIND, F-75007 Paris (FR)
(72) Inventeur: Chauvin, Bernard, F-49150 Bauge (FR)
(74) Mandataire: Hurwic, Aleksander

(57) **Abrégé**

L'invention concerne un procédé de fabrication par cuisson de produits alimentaires au moins en partie sous forme de mousse et les produits obtenus par sa mise en oeuvre.

Un procédé selon l'invention de fabrication de produits alimentaires au moins en partie sous forme de mousse par cuisson d'un appareil de départ est caractérisé en ce que ledit appareil subit un traitement thermique à au moins deux étapes successives, la première, -destinée à assurer la levée, et/ou à former et/ou expanser une structure du type mousse, foisonnée ou alvéolaire par une élévation rapide de la température au coeur dudit appareil seulement-, étant suivie immédiatement d'un chauffage complémentaire destiné à élever la température de la totalité du produit préalablement levé au cours de la première étape.

## Description

L'invention concerne un procédé de fabrication par cuisson de produits alimentaires au moins en partie sous forme de mousse et les produits obtenus par sa mise en oeuvre.

On sait que les produits alimentaires cuits, en totalité ou pour leur plus grande partie sous forme d'une mousse ou, à consistance aérée, alvéolaire ou foisonnée comme, par exemple, des pâtisseries à base de blancs d'oeufs montés en neige, ou des soufflés ou des tourteaux fromagers sont préparés par cuisson d'un appareil (au sens donné à ce terme en cuisine ou pâtisserie) de base dans une enceinte à température généralement élevée, de l'ordre de 220 à 280°C, pour amener rapidement la température au coeur du produit à une valeur de l'ordre de 80 à 100°C, température avant laquelle l'augmentation de volume de l'air ou d'un gaz comme du gaz carbonique contenu dans le produit provoque la levée ou l'expansion de ce dernier, laquelle est encore accrue, le cas échéant, par la formation de vapeur d'eau lorsque la température à coeur du produit se rapproche de 100°C. Pour que la structure aérée ou alvéolaire ainsi obtenue soit conservée, il importe que la levée s'accompagne d'un début de "rigidification" destinée à "charpenter" le réseau alvéolaire, le plus généralement protéique, encore fragile à ce stade de cuisson. Si, pour certains produits, comme des tourteaux fromagers, le niveau élevé de la température de cuisson a également pour conséquence de former rapidement une croûte ou carapace surfacique qui aide à maintenir le caractère alvéolaire ou de mousse du produit levé, en particulier par la voûte ménagée à la partie supérieure de la mousse, il n'en est pas de même pour d'autres produits, notamment dans le cas d'appareils pauvres en farine, ou très humides, ou à faible contenu de protéines structurantes, de sorte que ces produits ne peuvent pas être réalisés sous forme de mousse en raison du phénomène de "retombée" et de compactage qu'ils subissent lors de leur refroidissement dès la sortie du four après cuisson.

C'est, par conséquent, un but général de l'invention de fournir un procédé de fabrication par cuisson de produits alimentaires au moins en partie sous forme de mousse qui permette, de façon simple et sûre, d'assurer l'obtention de tels produits et cela y compris pour des appareils, compositions ou formulations de base qu'il était extrêmement difficile, voire impossible, de traiter à ce jour.

C'est, aussi, un but de l'invention de fournir un tel procédé applicable aux produits alimentaires les plus variés dont les appareils, compositions ou formulations de départ pour leur fabrication sont à base de lait ou de dérivés laitiers, de produits de la mer, de farines céréalières, de végétaux, de charcuterie, d'ovoproduits, etc....

C'est, encore, un but de l'invention de fournir un tel procédé permettant la réalisation de produits alimentaires au moins en partie sous forme de mousse, ou du type foisonné ou alvéolaire à structure relativement régulière, qui conservent leur qualité de texture au cours du temps et qui, complémentairement, aient un aspect et des qualités gustatives agréables pour le consommateur.

C'est, enfin, un but de l'invention de fournir des produits alimentaires cuits, au moins en partie sous forme de mousse, ou du type foisonné, ou alvéolaire qui puissent être fabriqués industriellement dans de bonnes conditions économiques.

Un procédé selon l'invention de fabrication de produits alimentaires au moins en partie sous forme de mousse par cuisson d'un appareil de départ est caractérisé en ce que ledit appareil subit un traitement thermique à au moins deux étapes successives, la première, -destinée à assurer la levée, et/ou à former et/ou expanser une structure du type mousse, foisonnée ou alvéolaire par une élévation rapide de la température au coeur dudit appareil seulement-, étant suivie immédiatement d'un chauffage complémentaire destiné à élever la température de la totalité du produit préalablement levé au cours de la première étape.

Dans une réalisation préférée de l'invention, la première étape est conduite à l'aide de micro-ondes qui provoquent une élévation de température dans la masse et au coeur de l'appareil de départ jusqu'à atteindre environ 70°C, 80°C, température à laquelle débute l'effet de gélification ou de coagulation des protéines à propriétés structurantes que renferme ledit appareil.

Selon l'invention, également, l'énergie thermique apportée par les micro-ondes l'est de manière telle que l'élévation de température de l'appareil de départ ne soit ni trop rapide, ni trop poussée de manière à conserver audit appareil des caractéristiques permettant, notamment, un accrochage par un effet de collage du produit levé sur une voûte formée simultanément à la surface supérieure dudit produit ou sur un couvercle, consommable ou non, préalablement disposé sur l'appareil de départ.

Dans une réalisation avantageuse de l'invention, l'énergie thermique apportée par les micro-ondes l'est à partir d'une source de puissance relativement faible, mais continue, pour éviter la formation de cavités dans la masse de la mousse formée.

Selon une autre caractéristique de l'invention, le chauffage et, par suite, la cuisson qui suit immédiatement l'étape provoquant la levée de l'appareil de départ est effectuée à une température inférieure à la température de cuisson généralement mise en oeuvre dans les procédés connus, de sorte qu'à l'avantage économique d'une moindre consommation d'énergie s'ajoute le fait que les produits obtenus à l'aide du procédé selon l'invention ne sont ni brûlés, ni calcinés en surface, comme cela est parfois le cas pour des produits pâtissiers du type des tourteaux fromagers ou analogues.

La cuisson qui suit la première étape du procédé selon l'invention est de préférence réalisée dans un four usuel, par exemple un four électrique ou à gaz dont la température peut être de l'ordre de 170°C pour la fabrication de tourteaux fromagers, c'est-à-dire une température inférieure d'environ 80°C à celle généralement mise en oeuvre pour la cuisson de produits semblables par les techniques usuelles.

Le procédé selon l'invention peut être mis en oeuvre pour la fabrication d'aliments du type pâtissier, notamment fromager, comportant un fond de pâte pâtissière et un appareil de départ à base de fromage, mais aussi des aliments à base de produits de la mer, de végétaux, de pâtes céréalières, de charcuterie, d'ovoproduits, etc..., ou encore des aliments "mixtes", c'est-à-dire associant à une partie à structure alvéolaire une partie à structure différente, comme une crème de dessert, etc ... et cela, compte-tenu du fait que le procédé selon l'invention permet de réaliser un aliment du type mousse, y compris en l'absence de voûte surfacique principalement si l'épaisseur de mousse est faible ou la surface étroite.

L'invention sera bien comprise par la description qui suit, faite à titre d'exemple, et en référence au dessin annexé dans lequel :
- les figures 1 et 2 sont des vues schématiques, en coupe, des produits obtenus à l'aide de deux appareils de départ différents ;
- les figures 3 et 4 sont des vues analogues à celles des figures 1 et 2 mais pour un autre mode de cuisson ;
- les figures 5 et 6 sont des vues analogues aux figures précédentes de produits obtenus à l'aide du procédé selon l'invention.

Dans ce qui suit, l'invention est explicitée dans son application à la fabrication de tourteaux fromagers sans que cette indication n'ait, cependant, quelque caractère limitatif que ce soit, le procédé pouvant être mis en oeuvre pour la fabrication, par cuisson, de produits alimentaires au moins en partie sous forme de mousse, que ceux-ci soient à base de lait, de protéines d'origine marine, végétale, de charcuterie, etc...

Pour la fabrication, par cuisson, d'un produit alimentaire en partie sous forme de mousse, comme un tourteau fromager, l'invention propose qu'un moule garni d'une pâte pâtissière, comme une pâte brisée, avantageusement précuite, et qui est garni d'un appareil monté à partir de fromage et de blancs d'oeufs c'est-à-dire alvéolaire ou sous forme de mousse relativement compacte avant cuisson, soit traité thermiquement en au moins deux étapes immédiatement successives, la première destinée à assurer la levée d'une structure mousse en la développant par une élévation rapide de la température au coeur de l'appareil, cette étape étant suivie d'un chauffage du produit préalablement levé pour poursuivre l'élévation de température et faire se "charpenter" et "rigidifier" le réseau protéique alvéolaire afin que celui-ci conserve, même après refroidissement, sa structure foisonnée et alvéolaire et, en cas de présence d'un élément supérieur en pâte pâtissière un accrochage permanent à une voûte.

Dans une réalisation préférée de l'invention, la première étape est conduite à l'aide d'un four à micro-ondes, du type de ceux utilisés dans les laboratoires et qui émettent des trains d'ondes continus, contrairement à la plupart des appareils électro-ménagers usuels à fonctionnement séquentiel. Cette première étape, dont la durée est de l'ordre de quelques minutes en fonction de la masse de l'appareil fromager de départ, est suivie immédiatement d'un chauffage complémentaire dans un four usuel, électrique, à gaz, ou autre dont la température est de l'ordre seulement de 170°C et où le produit est maintenu pendant une dizaine de minutes environ. En variante, on effectue la cuisson à une température plus élevée pouvant atteindre 250°C. De même, la seconde étape peut également être effectuée à une température relativement basse (inférieure à 100°C) à l'aide de micro-ondes.

Le produit final obtenu présente une structure de type mousse, très semblable à celle des produits fabriqués par la cuisson traditionnelle en une seule étape à une température de l'ordre de 250°C, les produits obtenus par le procédé de l'invention étant cependant démunis de la croûte ou voûte calcinée en surface des produits connus qui n'est pas comestible et qui limite la diffusion de ces produits dans la mesure où la croûte doit être retirée, opération considérée très défavorablement par les consommateurs.

L'énergie thermique apportée par les micro-onde l'est de manière telle que l'élévation de température de l'appareil de départ avantageusement continue n'est ni trop rapide, ni trop poussée, de manière à conserver audit appareil un certain caractère "collant" qui permet un accrochage de l'appareil levé sur une voûte surfacique formée simultanément, -sans toutefois qu'elle soit brûlée ou calcinée-, ou en variante sur un couvercle consommable ou non, ce dernier étant alors de préférence percé d'orifices pour permettre à l'air ou au gaz engendré dans la première étape de s'échapper à l'extérieur du produit au cours de sa levée.

Les conditions opératoires, -pour l'obtention d'un produit de qualité satisfaisante-, sont explicitées ci-après sur deux exemples d'appareils pâtissiers fromagers, désignés ci-après en tant qu'appareils C et G (ce dernier de plus grande humidité que le premier).

Les deux appareils ont été préparés et présentent les caractéristiques suivantes, avant cuisson :

| APPAREIL C | | | APPAREIL G | | |
|---|---|---|---|---|---|
| pH | = | 5,90 | pH | = | 5,73 |
| EST | = | 49,34 | EST | = | 44,76 |
| MG | = | 7,0 | MG | = | 7,0 |
| Densité | = | 0,498 | Densité | = | 0,577 |

où EST désigne l'extrait sec total en et MG le pourcentage de matières grasses.

Trois exemples d'appareil pâtissier-fromager entrant dans le champ de mise en oeuvre du procédé selon l'invention pour la fabrication de tourteaux fromagers sont explicités ci-après.

T est une composition de tourteau fromager fabriqué en technologie traditionnelle de cuisson (température de four élevée supérieure ou égale à 250°C). Cette composition permet à fortiori la fabrication d'aliments selon la présente invention.

C est une composition de tourteau fromager fabriqué en technologie de cuisson mixte suivant l'invention.

G est une composition de tourteau fromager fabriqué en technologie de cuisson mixte suivant l'invention, mais avec une composition et un produit final obtenu, qui est de nature plus humide que la référence C.

| **INGREDIENTS en % poids** | **REF T** | **REF C** | **REF G** |
|---|---|---|---|
| FROMAGE BLANC FRAIS | 26,13 | 31,50 | 34,00 |
| SUCRE SEMOULE | 25,87 | 21,00 | 21,00 |
| JAUNE D'OEUF | 16,20 | 16,50 | 15,50 |
| FARINE DE BLE T55 | 7,58 | 7,50 | 6,00 |
| SEL | 0,70 | 0,50 | 0,50 |
| BLANC D'OEUF MONTE EN NEIGE | 23,52 | 23,00 | 23,00 |
| | 100,00 | 100,00 | 100,00 |
| TAUX D'HUMIDITE DE L'APPAREIL | 42 % | 45,4 % | 47,2 % |
| DENSITE | 0,405 | 0,498 | 0,577 |

Le procédé de préparation des appareils pâtissiers-fromagers mis en oeuvre est identique pour la préparation des trois références.

Le fromage blanc s'égoutte de son jus pendant une heure environ.

Chaque appareil sera préparé en deux temps avec la préparation de ce que l'on appellera le mix jaune, puis la préparation des blancs d'oeufs montés en neige, et enfin l'incorporation dans le mix jaune des blancs montés en neige pour obtenir le mélange final appelé "appareil pâtissier-fromager".

Lors de la préparation du mix jaune, on met dans un bol mélangeur équipé d'une queue de cochon le fromage blanc en tournant à vitesse lente, on ajoute les deux tiers du sucre semoule, puis les jaunes d'oeufs. Quand ce premier mélange apparaît être suffisant, on incorpore progressivement la farine.

L'ensemble des composants du mix jaune étant dans le bol, on accélère progressivement la vitesse du mélangeur. On arrête l'opération quand le mélange est visiblement homogène.

Lors de la préparation de la mousse de blancs d'oeufs montés en neige, on met dans un bol mélangeur équipé d'un fouet les blancs d'oeufs, on y ajoute le sel, on fouette sans interruption pendant 6 minutes et, sans arrêter de battre, on ajoute le tiers de sucre restant, et on continue à fouetter pendant 3 minutes.

L'opération est terminée, la mousse de blancs d'oeufs ainsi obtenue est ferme et tranchable, elle doit être maintenue dans une ambiance fraîche et son utilisation finale doit se faire rapidement.

Cette même mousse de blancs d'oeufs peut être préparée industriellement grâce aux appareils foisonneurs dont le principe est de battre très rapidement la matière en introduisant simultanément de l'air ou des gaz inertes tels que l'azote ou encore le CO₂.

Il est possible de préparer directement l'appareil final à partir d'un mélange simple de l'ensemble des ingrédients et d'un passage dans un appareil foisonneur.

Lors de la préparation du mélange final, la mousse de blancs d'oeufs est introduite progressivement dans le mix jaune d'oeuf de façon délicate afin de conserver au mieux la structure de cette mousse tout en la répartissant de façon la plus homogène possible pour permettre ainsi l'obtention d'un "appareil pâtissier-fromager" qui sera bien, lui-même, dès le départ avant le début de sa cuisson, une mousse constituée de micro-bulles d'air (ou de gaz tel que de l'azote ou du CO₂ dans le cas d'une préparation en appareil foisonneur).

Les densités de pâte de ces "appareils pâtissiers-fromagers" montrent bien qu'ils ont une structure de mousse dès la fin de leur préparation, avant leur utilisation, pour l'opération de cuisson.

Un mélange simple de l'ensemble d'ingrédients nous donnerait une densité supérieure à 0,90 et un "appareil pâtissier-fromager" non conforme à l'utilisation et ne permettant pas la fabrication d'un tourteau et ce, pour les trois références T, C et G.

Les deux appareils C et G sont traités simultanément de la manière indiquée dans les six essais suivants.

### ESSAI N° 1.

Les deux appareils sont cuits au four électrique usuel à une température de l'ordre de 250°C pendant 20 minutes. On constate, à la sortie du four, et après refroidissement au cours duquel les produits sont retombés après levée initiale, que les produits manquent de cuisson, que les faces supérieures sont cependant calcinées et que les fonds ne sont pas cuits et compacts.

### ESSAI N° 2.

On procède comme dans l'essai N° 1, mais en disposant sur les appareils de départ et avant cuisson un couvercle ajouré en pâte pâtissière précuite.

On constate, après cuisson, un aspect proche de celui des produits obtenus dans l'essai n° 1 mais sans que les surfaces de dessus soient calcinées. Les produits sont cependant insuffisamment cuits et retombés après refroidissement.

### ESSAI N° 3.

On procède comme dans l'essai N° 1 mais en conduisant la cuisson à une température de l'ordre de 170°C pendant 27 minutes. On constate, après refroidissement, que les produits manquent de cuisson, que les faces supérieures ne sont toutefois pas calcinées, mais que les fonds ne sont pas cuits, sont mous et compacts. Les produits qui ont légèrement levé sont retombés au refroidissement.

### ESSAI N° 4.

Il est conduit en mettant en oeuvre le procédé selon l'invention avec une première étape de traitement thermique au four à micro-ondes suivie d'une étape de cuisson au four électrique, les appareils de départ étant initialement placés dans un fond de pâte pâtissière précuite et recouverts d'un couvercle ajouré en pâte pâtissière également précuite.

La première étape, d'une durée de 2 minutes 30 dans un four à micro-ondes réglé à 300 W en diffusion continue est immédiatement suivie d'une seconde étape de cuisson au four électrique à 170°C pendant 13 minutes.

On constate, après refroidissement, que les appareils ont levés, que les fonds sont relativement bien cuits et que chaque appareil levé est partiellement accroché en partie basse du couvercle, avec toutefois les parties centrales des produits finis partiellement retombées, vraisemblablement en raison d'un temps de cuisson au four micro-ondes trop court n'ayant pas permis un accrochage au sommet du couvercle bombé.

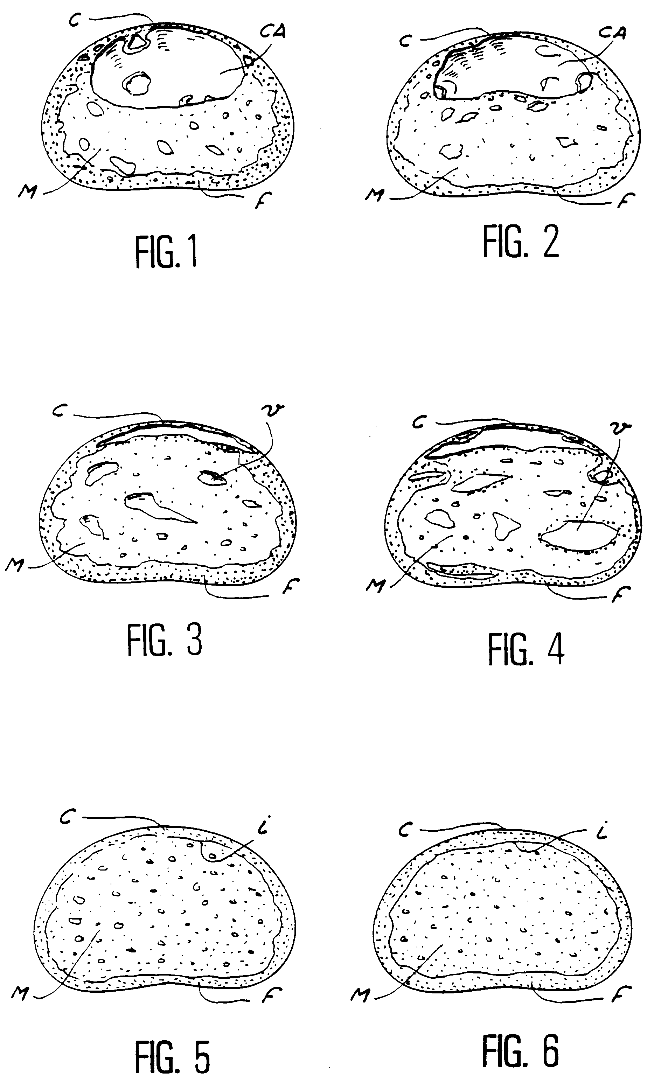

Les produits ont l'aspect montré sur les figures 1 et 2 relatives, la première à l'appareil G et la seconde à l'appareil C ; Sur ces figures, les fonds sont désignés par la référence f, les couvercles par la référence c, la partie sous forme de mousse par la référence M et les parties centrales retombées forment des cavités CA.

### ESSAI N° 5.

On procède exactement comme pour l'essai N° 4, mais avec une puissance diffusée continue par le four à micro-ondes de 600 W au lieu de 300 W.

On constate que l'appareil structuré au cours de la première étape de traitement thermique s'est accroché au couvercle, en raison de son caractère encore collant à la fin de cette première étape, et que la structure alvéolaire a été conservée au cours de la deuxième étape de cuisson et au cours du refroidissement du produit.

On remarque cependant, comme montré sur les figures 3 et 4 relatives à l'appareil G et à l'appareil C, respectivement et où les mêmes références désignent des parties correspondantes à celles des figures précédentes, qu'il existe des défauts d'homogénéité dans le corps des produits finis comme des vides v.

### ESSAI N° 6.

On procède exactement comme dans l'essai N° 4, mais en mettant en oeuvre une première étape de traitement thermique de l'ordre de 4 minutes dans un four à micro-ondes diffusant une puissance continue de 300 W.

On constate alors, comme montré sur les figures 5 et 6 relatives à l'appareil G et à l'appareil C, respectivement, l'absence de cavités importantes dans la masse alvéolaire M du produit fini, une levée complète de l'appareil de départ, un bon accrochage de la mousse à la face interne i du couvercle c, la qualité et la structure de l'ensemble étant conservées lors du refroidissement.
Les caractéristiques des produits finis obtenus au cours des six essais qui viennent d'être décrits et en ce qui concerne l'extrait sec total et le pourcentage de matières grasses sont indiquées sur le Tableau ci-après :

| | PRODUITS OBTENUS A PARTIR DE L'APPAREIL C après cuisson | PRODUITS OBTENUS A PARTIR DE L'APPAREIL G après cuisson |
|---|---|---|
| ESSAI 1 | EST = 59,43 | EST = 52,60 |
| ESSAI 2 | EST = 59,28 | EST = 53,93 |
| ESSAI 3 | EST = 58,13 | EST = 53,18 |
| ESSAI 4 | EST = 57,93 | EST = 54,83 |
| ESSAI 5 | EST = 67,22 | EST = 58,64 |
| ESSAI 6 | EST = 63,90 | EST = 57,36 |

Il apparaît de ce qui précède que des produits très satisfaisants sont obtenus à l'aide d'un traitement thermique d'une durée de quelques minutes conduit dans un four à micro-ondes diffusant une puissance continue qui n'est pas trop importante et avec un traitement ultérieur dans un four usuel à une température de l'ordre de seulement 170°C pendant une quinzaine de minutes.

Il est à noter que l'appareil G ne peut pas être mis en oeuvre pour la fabrication de tourteaux fromagers par la méthode traditionnelle car la mousse formée lors de la cuisson retomberait lors du refroidissement.

Les appareils de départ au moins en partie sous forme de mousse foisonnés et/ou alvéolaires, se développent lors de la cuisson sans nécessiter la mise en oeuvre de levure chimique.

## Revendications

1. Procédé de fabrication de produits alimentaires au moins en partie sous forme de mousse (M) par cuisson d'un appareil de départ au moins en partie sous forme de mousse, foisonné ou alvéolaire, caractérisé en ce que ledit appareil subit un traitement thermique à au moins deux étapes successives, -la première destinée à assurer la levée de la structure du type mousse, foisonnée ou alvéolaire par une élévation rapide de la température au coeur dudit appareil seulement-, étant suivie d'un chauffage complémentaire destiné à élever la température de la totalité du produit préalablement levé au cours de la première étape.

2. Procédé selon la revendication 1, caractérisé en ce que la première étape est conduite à l'aide de micro-ondes qui provoquent une élévation de température dans la masse et au coeur de l'appareil de départ jusqu'à atteindre environ 70°C à 80°C, température à laquelle débute l'effet de gélification ou de coagulation des protéines à propriétés structurantes que renferme ledit appareil.

3. Procédé selon la revendication 2, caractérisé en ce que l'étape de chauffage complémentaire destinée à élever la température de la totalité du produit préalablement levé au cours de la première étape est effectuée par un chauffage à l'aide des micro-ondes.

4. Procédé selon la revendication 1 ou la revendication 2, caractérisé en ce que la cuisson qui suit immédiatement l'étape provoquant la levée de l'appareil de départ est effectuée, pour des produits comme des tourteaux fromagers, à une température de l'ordre de seulement 170°C.

5. Procédé selon l'une quelconque des revendications 1 à 4, pour la fabrication de produits comme des tourteaux fromagers, caractérisé en ce que la première étape est conduite dans un four à micro-ondes diffusant une puissance de l'ordre de 300 W et pendant une durée de quelques minutes, cette étape étant suivie immédiatement d'une cuisson dans un four chauffé à environ seulement 170°C pendant une dizaine de minutes.

6. Procédé selon la revendication 5, caractérisé en ce que le four à micro-ondes diffuse une puissance continue.

7. Aliment obtenu par mise en oeuvre du procédé selon l'une quelconque des revendications précédentes, notamment tourteau fromager, aliment à base de lait ou de dérivés laitiers, de farines céréalières, à base de produits de la mer, de végétaux, de charcuterie, d'ovoproduits ou analogues.
